# EUROPEAN PATENT APPLICATION

(11) **EP 2 918 749 A1**
(43) Date of publication of application: **16.09.2015**
(21) Application number: 12887982.2
(22) Date of filing: 12.11.2012
(51) Int. Cl.: E04H 4/12

(54) **LID FOR FILTER AND FILTER COMPRISING SAID LID**

(71) Applicant: SACOPA, S.A.U., 17854 Sant Jaume de Llierca (Girona) (ES); I.D. Electroquimica, S.L., 03114 Alicante (ES)
(72) Inventor: SANCHEZ CANO, Gaspar, E-03114 Alicante (ES); CODINA RIPOLL, Guillermo, E-03114 Alicante (ES); PÉREZ MALLOL, José, Ramón, E-03114 Alicante (ES); GONZALEZ SIERRA, Javier, E-17854 Sant Jaume De Llierca Girona (ES); COLLELLDEVALL PLANELLA, Jordi, E-17854 Sant Jaume De Llierca Girona (ES)
(74) Representative: Carpintero Lopez, Francisco
(86) International application number: PCT/ES2012/070784
(87) International publication number: WO 2014/072542

(57) **Abstract**

The invention relates to a filter cover, characterized in that it comprises means (3, 4, 6, 7, 10, 14) for the chemical treatment of a fluid, such as injectors (6, 7, 10), electrodes (14) and/or probes (3, 4) located in said cover (1). Said injectors (6, 7, 10) can be disinfectant/oxidant injectors, flocculant injectors and/or a pH reducing or increasing product injectors, and said probes (3, 4) can be probes for controlling the disinfectant/oxidant level and/or pH level in the fluid.

The invention allows achieving a single filter in which physical treatment and chemical treatment can be performed, assuring integral treatment according to health regulations.

## Description

The present invention relates to a filter cover, particularly to a pool filter cover, which allows integrating in a single filter a system for the physical treatment and a system for the chemical treatment of pool water. Furthermore, the present invention also relates to a filter comprising said cover.

### Background of the Invention

The integral treatment of pool water continuously and cyclically requires the following simultaneous treatments in order to comply with health regulations and affecting organoleptic, physical, chemical and microbiological parameters:
1. Filtration.
2. pH adjustment.
3. Addition of an oxidant/disinfectant with a residual effect.

A range of pool filters made from injected plastic is known. They are conventional filters, the sole purpose of which is to perform the physical treatment of water, i.e., to make the water circulate through filtering means, such as sand (silex), zeolites, glass, etc., retaining therein all the particles contained in the water after a certain size.

However, in order to achieve integral treatment of water that complies with health regulations, pool water must also be subjected to chemical treatments (pH adjustment and adjustment of the levels of oxidant/disinfectant with a residual effect). In a conventional installation, there must therefore be two units that are well differentiated and separated in the installation (physical treatment unit + chemical treatment unit), whereby raising the cost of materials used, entailing a considerable number of hours to install it and requiring more space in the equipment room, which is even more important in residential installations.

Therefore, a first objective of the present invention is to obtain a single filter (single unit) in which both treatment functions, i.e., physical treatment and chemical treatment, assuring integral treatment according to health regulations, can be performed.

### Description of the Invention

The mentioned drawbacks are solved with the cover and the pool filter of the invention, having other advantages that will be described below.

The filter cover of the present invention is characterized in that it comprises means for the chemical treatment of a fluid.

As a result of this feature, by simply installing the cover of the invention a filter is obtained that allows physical treatment (filtration) and chemical treatment (pH adjustment and oxidant/disinfectant metering of the water being filtered), providing integral treatment of the pool water, in a very compact space, at a low cost and in a short time.

Said means for the chemical treatment of said fluid advantageously comprise injectors, electrodes and/or probes located in said cover. For example, said injectors are disinfectant injectors, flocculant injectors and/or pH reducing or increasing product injectors, and said probes are probes for controlling the disinfectant level and/or pH level in the fluid.

It must be indicated that the oxidant/disinfectant metering can optionally be done by means of chemical (such as hypochlorite) metering or it can be generated *in situ* by means of salt electrolysis.

The pool filter cover can also comprise a plurality of walls for separating the reading, injection and/or electrolysis points.

Furthermore, said cover also preferably comprises a flow switch for controlling the flow of fluid inside the filter, such that if circulation is not detected, the chemical treatment (metering and/or electrolysis) will necessarily stop, and the filtration treatment will optionally stop for safety reasons.

Advantageously, said cover also comprises a pH minus (acid) injector which, in addition to performing the necessary pH adjustment, will perform the task of automatically cleaning off the lime depositions in the injector (hypochlorite) or lime depositions in the electrolysis cathodes. The pH minus injector and the oxidant/disinfectant or electrolysis injector will be in the same flow distribution channel, the pH minus being located in the first position in the flow path in order to influence lime deposition removal with low pHs.

According to a preferred embodiment, the cover of the present invention also comprises deflectors to split the fluid inflow into at least a first flow and a second flow in different directions crossing with one another after said splitting. Preferably, one of said first and second flows is vertical and the other one is horizontal.

According to a preferred embodiment, the deflectors split the flow into eight dual distribution channels: 8 upper channels (vertical flow) and 8 lower channels (horizontal flow).

By means of this splitting of the flow, dissolution is homogenized and the flow is distributed in the entire section of the filter, also maintaining the height of the filter bed.

Preferably, the eight upper channels are used to suitably separate the different elements making up the chemical treatment without interfering in metering and measuring the water parameters.

Advantageously, said cover also comprises a display and control screen where the parameters of said fluid can be displayed and controlled.

Advantageously, said disinfectant injector or said electrodes disinfect the pool water and the sand or filtering means of the filter, reaching concentrations between 3 and 10 ppm (parts per million) of chlorine.

According to a second aspect, the present invention relates to a cover as described above.

### Brief Description of the Drawings

To better understand the description, a set of drawings is attached in which a practical embodiment has been schematically depicted by way of non-limiting example.
Figure 1 is a perspective view of the pool filter cover of the present invention;
Figure 2 is a sectioned perspective view of the pool filter cover of the present invention, where particularly the presence of the flow switch can be seen;
Figure 3 is a sectioned perspective view of the pool filter cover of the present invention, where particularly the arrangement of the acid injector and the oxidant injector can be seen;
Figure 4 is a sectioned perspective view of the pool filter cover of the present invention according to a second embodiment, where the arrangement of the electrolysis can be seen;
Figure 5 is a sectioned elevational view of the pool filter cover of the present invention, where particularly the splitting of the water inflow can be seen; and
Figure 6 is a plan view of the part provided with partition walls for separating the reading points from the injection points.

### Description of a Preferred Embodiment

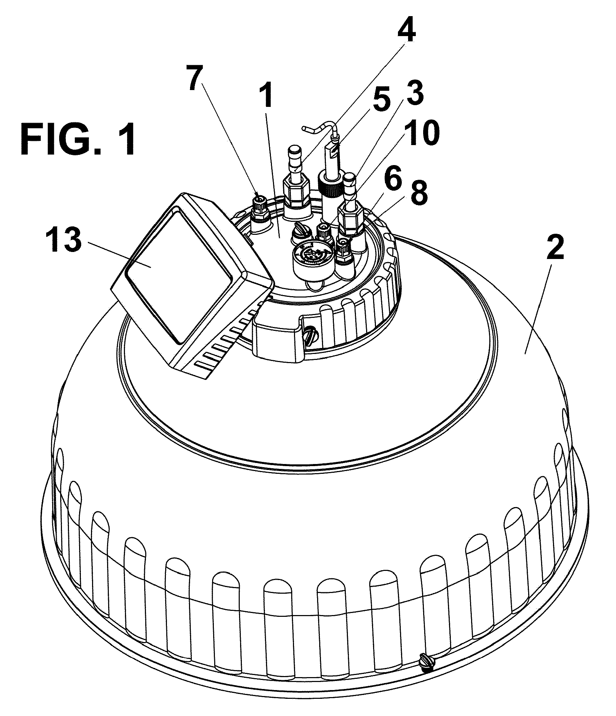

Figure 1 shows a perspective view of the pool filter cover of the present invention, generally indicated by means of reference number 1.

Although it has not been depicted in the drawings in its entirety, this cover 1 is coupled on a conventional filter body 2, for which reason it is not described in detail. As is common, a pool filter performs physical treatment on the pool water, i.e., it comprises filtering means for retaining particles contained in the pool water after a certain size.

As seen in Figure 1, said cover 1 comprises means for the chemical treatment of water, such that by simply coupling the cover 1 on a conventional filter body 2, a filter is obtained that performs the dual chemical treatment and physical treatment function on the pool water (integral treatment), advantageously without cutting or gluing pipes.

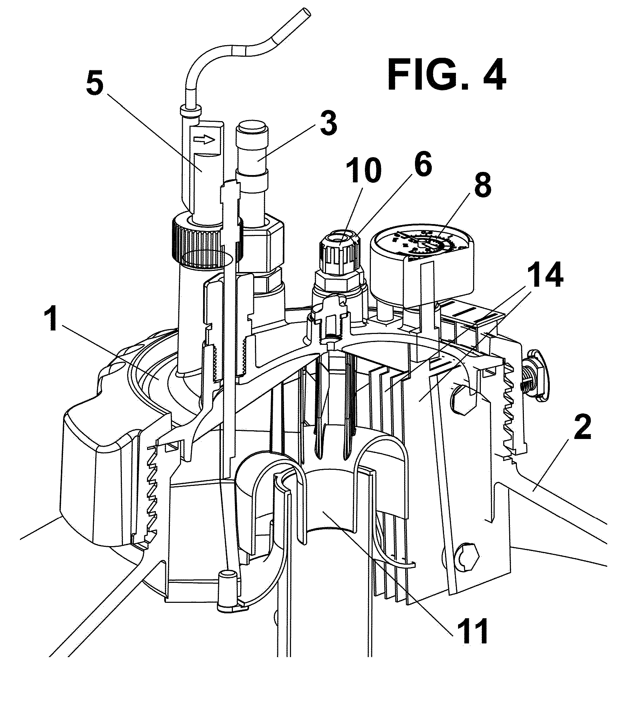

Throughout the present description and in the claims reference is made to different means for the chemical treatment of water. By way of example, said means for chemical treatment comprises at least some of the following elements:
- ORP probe 3: Takes readings of the disinfectant/oxidant level in the water and controls the injection or production of electrolysis to be able to maintain predetermined disinfectant levels.
- pH probe 4: Takes readings of the pH level of the water and controls the injection of a pH reducing or increasing product.
- Flow switch 5: Safety element that allows knowing if water is circulating inside the filter. If circulation is not detected, it stops chemical treatment for safety reasons, preventing high local concentrations of chemicals and the risk this entails.
- Liquid disinfectant injector 6: Injects hypochlorite to disinfect the pool water and the sand or filtering means of the filter, and optionally salt electrolysis (*in situ* hypochlorite electrogeneration, 14 in the embodiment of Figure 4).
- pH reducing or increasing product injector 10: Injects a product that prevents the pH level from increasing or decreasing due to the injection or production of disinfectant, in addition to helping prevent the formation of lime depositions at the disinfectant injection point or electrolysis cathodes.
- Flocculant injector 7: Injects flocculant to achieve complete transparency of the water and assists with or potentiates physical treatment (filtration).

Arrangement of a pressure gage 8 and a display and control screen 13, which allows displaying and controlling different pool water parameters, is also provided in said cover 1.

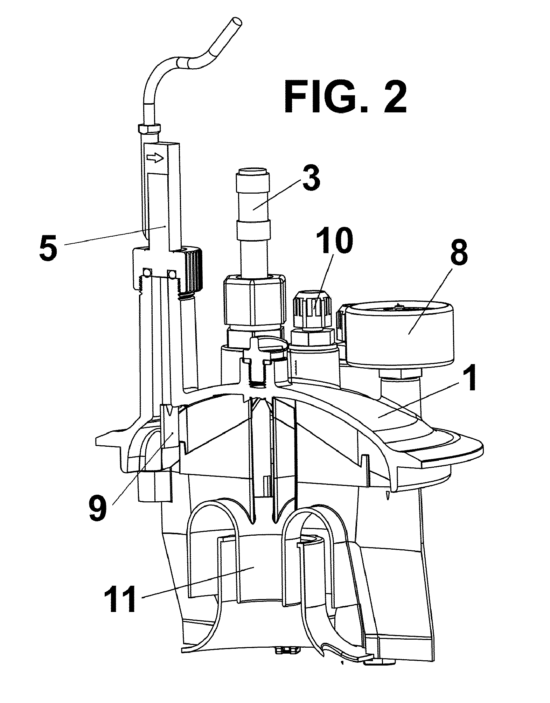

Figure 2 shows in further detail the arrangement of the flow switch 5 in the cover 1 of the filter of the present invention. Said flow switch 5 comprises a blade 9, through which water flow can be detected, such that in the event that no flow is detected, operation of the means for chemical treatment stops.

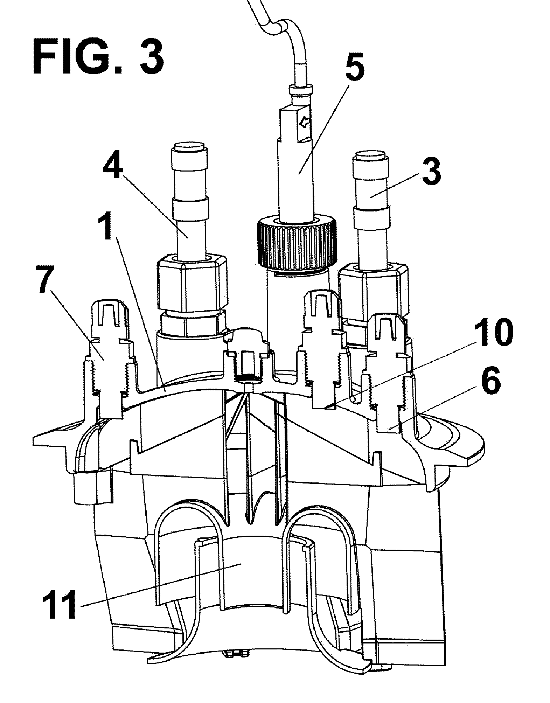

In turn, Figure 3 shows that the cover 1 also comprises an acid injector 10 located upstream of said oxidant injector 6, such that said acid cleans the oxidant injection point.

According to a second embodiment depicted in Figure 4, the cover 1 of the present invention can also comprise one or more electrodes 14 for salt electrolysis. In this embodiment, the acid injector 10 can clean the electrolysis cathodes.

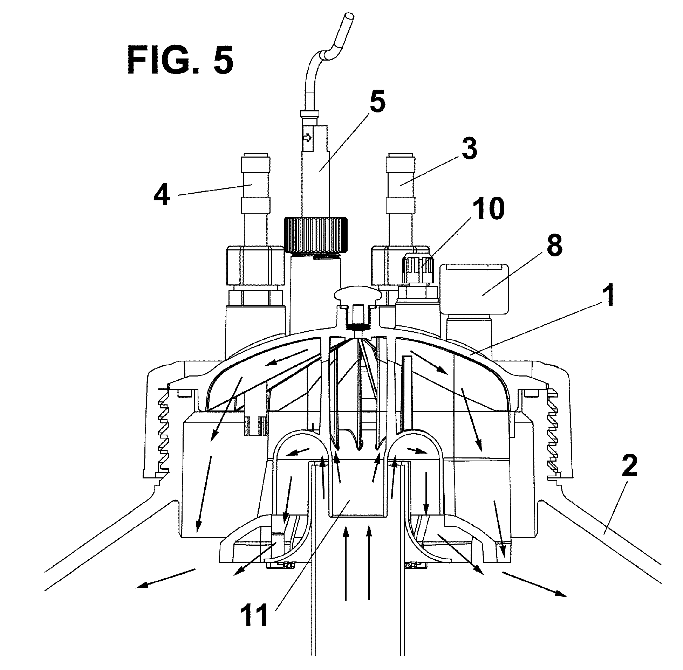

Water inflow for filtration has been depicted in Figure 5 by means of arrows. It must be indicated that said Figure 4 shows two dual channels (2 upper channels and 2 lower channels) of the 8 existing dual channels according to a preferred embodiment.

A common problem in conventional filters is that the filtering means (sand or others) are moved by the water flow and are no longer horizontal.

To solve this drawback the cover 1 has been designed with a deflector 11 to split the water inflow into a first flow and a second flow in different directions.

Said deflector 11 specifically comprises a central tube that turns into two side deviations, such that one part of the incoming water will continue through said central tube until reaching the upper inner part of the cover, flowing down vertically (first flow), and the other part of the incoming water will go through said side deviations in order to come out horizontally (second flow). When the two flows run into each other, they lose speed and direction, meaning that the sand does not have a direct flow and remains horizontal.

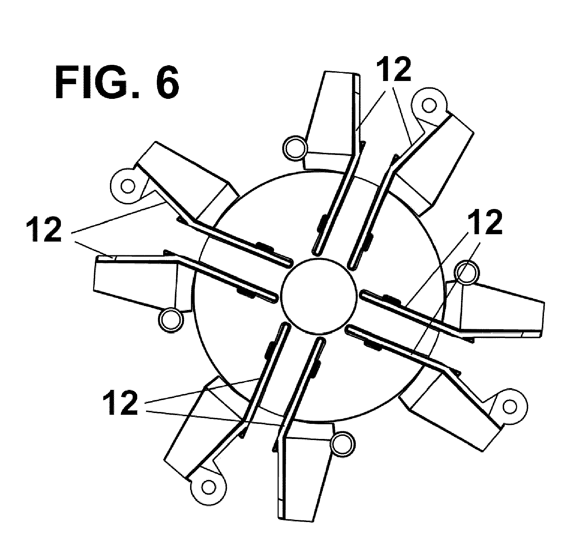

Furthermore, the cover 1 of the filter of the present invention also comprises a part provided with a plurality of divisional walls 12 (Figure 6), generating, for example, eight dual distribution channels (8 upper channels and 8 lower channels). The upper channels are used to suitably separate the different elements making up the chemical treatment, preventing interferences when metering and measuring water parameters. The lower channels suitably mix part of the flow with the upper channels, allowing a distribution of water to be filtered that does not change the level of the filter bed.

It must be indicated that the cover 1 can be coupled to the filter body 2 in any suitable manner, advantageously without cutting or gluing pipes. For example, the cover 1 and the filter body 2 can be coupled by means of threading.

Despite having referred to a specific embodiment of the invention, it is evident for a person skilled in the art that the described cover and filter are susceptible to a number of variations and modifications, and that all the mentioned details can be replaced with other technically equivalent details without departing from the scope of protection defined by the attached claims.

## Claims

1. Filter cover, **characterized in that** said cover (1) comprises means (3, 4, 6, 7, 10, 14) for the chemical treatment of a fluid.

2. Filter cover according to claim 1, wherein said means for chemical treatment comprise injectors (6, 7, 10), electrodes (14) and/or probes (3, 4) located in said cover (1).

3. Filter cover according to claim 2, wherein said injectors (6, 7, 10) are disinfectant/oxidant injectors, flocculant injectors and/or a pH reducing or increasing product injectors.

4. Filter cover according to claim 2, wherein said probes (3, 4) are probes for controlling the disinfectant/oxidant level and/or pH level in the fluid.

5. Filter cover according to claim 2, also comprising a plurality of partition walls (12) to prevent interferences between the reading, injection and/or electrolysis points.

6. Filter cover according to any of the preceding claims, also comprising a flow switch (5) as a safety element for controlling the flow of fluid inside the filter.

7. Filter cover according to claim 2, also comprising an acid injector (10) for cleaning an injector (6) or electrode (14), said acid injector (10) being arranged upstream with respect to said injector (6) or electrode (14).

8. Filter cover according to any of the preceding claims, also comprising a deflector (11) to split the fluid inflow into at least a first flow and a second flow in different directions crossing with one another after said splitting, achieving stability of the level of the filter bed.

9. Filter cover according to claim 8, wherein one of said first and second flows is vertical and the other one is horizontal.

10. Filter cover according to any of the preceding claims, also comprising a display and control screen (13) where the parameters of said fluid can be displayed and controlled.

11. Filter cover according to claim 2 or 3, wherein said disinfectant injector (6) or said electrodes (14) disinfect the pool water and the sand or filtering means of the filter.

12. Pool filter, comprising filtering means for retaining particles contained in the pool water after a certain size and a cover (1) according to any one of the preceding claims.
